# EUROPEAN PATENT SPECIFICATION

(11) **EP 0 380 236 B1**
(45) Date of publication and mention of the grant of the patent: **10.05.1995**
(21) Application number: 90300510.6
(22) Date of filing: 18.01.1990
(51) Int. Cl.: C08G 77/458, C08G 77/452, C08G 18/65, C08J 5/18

(54) **Organopolysiloxane-polyurea block copolymer and method for its production**
Organopolysiloxan-Polyharnstoff Blockcopolymer und Methode zu seiner Herstellung
Copolymères séquencés de polyorganosiloxane-polyurée et méthode de leur préparation

(30) Priority: 23.01.1989 US 300346
(43) Date of publication of application: 01.08.1990
(73) Proprietor: MINNESOTA MINING AND MANUFACTURING COMPANY, St. Paul, Minnesota 55133-3427 (US)
(72) Inventor: Leir, Charles M., c/o Minnesota Mining and, P.O. Box 33427,St. Paul,Minn. 55133-3427 (US)
(74) Representative: Baillie, Iain Cameron

(56) References cited:
- EP-A- 0 250 248
- DE-A- 3 621 040
- FR-A- 1 481 512

## Description

The present invention relates to organopolysiloxane- polyurea block copolymers, and a method of making the same.

The invention also relates to a film of such block copolymers and sheet material coated with such a film.

Block copolymers have long been used to obtain desirable performance characteristics in various products such as films, adhesives and molded articles. Block copolymers are particularly useful because the blocks can be chemically tailored to optimize desired characteristics.

Siloxane polymers have unique properties derived mainly from the physical and chemical characteristics of the siloxane bond. Such properties include low glass transition temperatures, high thermal and oxidative stability, UV resistance, low surface energy and hydrophobicity, good electrical properties and high permeability to many gases. They also have very good biocompatibility and are of great interest as biomaterials which can be utilized in the body in the presence of blood.

Unfortunately, despite these desirable features, most polydimethylsiloxane polymers based solely on polydimethylsiloxane lack tensile strength. Consequently, several references suggest ways for conveniently increasing the strength of siloxane polymers especially elastomers. For example, various references suggest that mechanical properties of polysiloxane polymers can be improved substantially through the preparation of block copolymers which include as a repeating unit a "soft" polysiloxane block or segment and any of a variety of other "hard" blocks or segments such as polyurethane. See, for example, (Ward) GB 2 140 444B, published June 5, 1985, (Cavezzan et al) U.S. 4,518,758, (Nyilas) U.S. 3,562,352, and (Kira) U.S. 4,528,343.

Segmented polydimethylsiloxane polyurea elastomers, with silicone segment molecular weights less than about 4,000, prepared from silicone diamines and diisocyanates are described in Polymer, Vol. 25, pages 1800-1816, December, 1984.

However, elastomers with silicone segment molecular weights greater than about 4,000 have not been described in the literature. This reflects the difficulty of obtaining silicone diamines of sufficient purity having molecular weights greater than about 4,000. Inherent in the conventional method of preparation of silicone diamines is the generation of monofunctional and nonfunctional impurities in the desired diamine product. These contaminants have the same average molecular weight as the diamine but cannot be removed from the diamine. Thus, elastomers obtained by chain extension of these silicones contain these impurities, and the elastomeric properties are negatively affected by them. For example, monofunctional impurities inhibit the chain extension reaction and limit the attainment of optimum molecular weight, and thereby optimum tensile strength, of the polyurea. Nonfunctional silicone oil can act as a plasticizing agent, which also contributes to reduction in tensile strength, and such oil can bloom to the surface of the elastomer and be transferred, e.g., to a pressure sensitive adhesive in contact with it, resulting in loss of adhesive properties.

EP-A-250,248 discloses an organopolysiloxane- polyurea block copolymer having the following recurring unit: 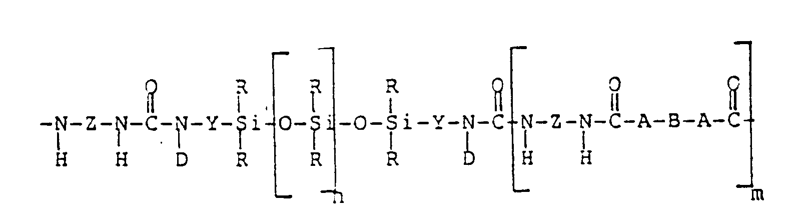
where:
Z is a divalent radical selected from phenylene, alkylene, aralkylene and cycloalkylene;
Y is an alkylene radical of 1 to 10 carbon atoms;
R is at least 50% methyl with the balance of the 100% of all R radicals being monovalent alkyl or substituted alkyl radical having from 2 to 12 carbon atoms, a vinylene radical, phenyl radical, or substituted phenyl radical;
D is hydrogen, an alkyl radical of 1 to 10 carbon atoms or an alkylene radical which completes a ring structure including Y to form a heterocycle or phenyl;
B is a divalent radical selected from alkylene, aralkylene, cycloalkylene, phenylene, polyethylene oxide polytetramethylene oxide, polycaprolactone, and mixtures thereof;
A is difunctional moiety selected from -O- or 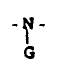
where G is hydrogen, an alkyl radical of 1 to 10 carbon atoms, phenyl, or an alkylene radical which completes a ring structure including B to form a heterocycle;
n is a number which is 50 or larger; and
m is a number which can be zero to about 25.

The above EP-A-250,248 also discloses a method of making the above block copolymer, comprising polymerising a silicone diamine with a diisocyanate and a chain extender.

DE-A-3,621,040 discloses a process for preparing aqueous polysiloxane ionomers in which a silicon diamine of formula: 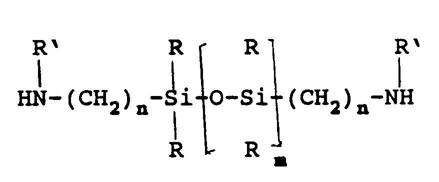
wherein R is C₁-C₅ alkyl or C₆-C₁₅ alkyl or siloxyl
n is 1 to 10
m is 1 to 500
and R 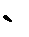 is H, C₁-C₆ alkyl or C₆-C₁₅ alkyl is reacted with polyisocyanate (preferably a diisocyanate) and the resulting copolymer is subsequently reacted with a salt forming group of a low MW compound such as an aminocarboxylic acid, which functions as on end - capper or chain linker.

The present invention provides a water-dispersible organopolysiloxane- polyurea block copolymer comprising the following repeating unit: 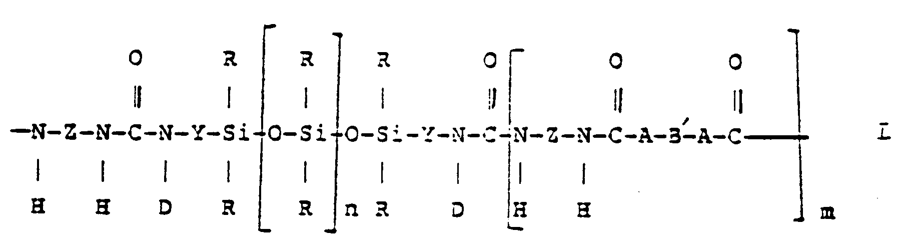
where:
- Z: is a divalent radical selected from phenylene, alkylene, aralkylene and cycloalkylene;
- Y: is an alkylene radical of 1 to 10 carbon atoms;
- R: is at least 50% methyl with the balance of the 100% of all R radicals being selected from a monovalent alkyl radical having from 2 to 12 carbon atoms, a substituted alkyl radical having from 2 to 12 carbon atoms, a vinyl radical, a phenyl radical, and a substituted phenyl radical;
- D: is selected from hydrogen, an alkyl radical of 1 to 10 carbon atoms, and phenyl;
- B': is selected from alkylene, aralkylene, cycloalkylene, phenylene, polyethylene oxide, polypropylene oxide, polytetramethylene oxide, polyethylene adipate, polycaprolactone, polybutadiene, mixtures thereof, and a radical which completes a ring structure including A to form a heterocycle, which contains a sufficient number of in-chain or pendant ammonium ions or pendant carboxylate ions to render the block copolymer water-dispersible, the block copolymer having an ionic content no greater than about 15%;
- A: is selected from the group consisting of -O-, and 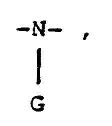 where G is selected from the group consisting of hydrogen, an alkyl radical of 1 to 10 carbon atoms, a phenyl group , and a radical which completes a ring structure including B' to form a heterocycle;
- n: is a number which is 10 or larger, and
- m: is a number, other than zero, of up to 25.

The above organopolysiloxane- polyurea block copolymers have the conventional excellent physical properties associated with polysiloxanes of low glass transition temperature, high thermal and oxidative stability, UV resistance, low surface energy and hydro- phobicity, good electrical properties and high permeability to many gases, and the additional desirable property of having excellent mechanical and elastomeric properties. The organopolysiloxane-polyurea block copolymers of the present invention are thought to have good biocompatibility and are capable of being utilized in situations where conventional polysiloxane polymeric materials have found use. The organopolysiloxane-polyurea block copolymers of the present invention are particularly useful, when tackified with a compatible tackifier resin, as pressure sensitive adhesive compositions.

The organosiloxane-polyurethane block copolymers of the present invention are segmented copolymers of the (AB)ₙ type which can be obtained through a condensation polymerization of a difunctional organopolysiloxane amine (which produces soft segment) with a diisocyanate (which produces a hard segment) and may include a difunctional chain extender such as a difunctional amine or alcohol, or a mixture thereof.

In the preferred block copolymer Z is selected from hexamethylene, methylene bis-(phenylene), isophorone, tetramethylene, cyclohexylene, and methylene dicyclohexylene and R is methyl.

A method of making the organopolysiloxane-polyurea block copolymer is also provided. The method comprises polymerizing a silicone diamine with at least one diisocyanate in the presence of up to 95 weight percent chain extender under an inert atmosphere in a water soluble solvent, said solvent having a boiling point of less than 100°C, said silicone diamine having the following general formula: 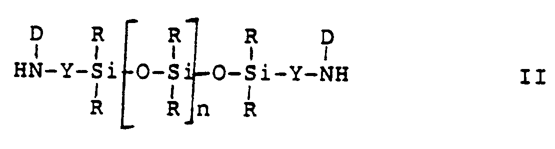
where R, Y, D and n are as defined in Formula I above, and said at least one diisocyanate having a molecular structure represented by Formula III, as follows:

OCN-Z-NCO III

where Z is as defined in Formula I above; the molar ratio of diamine to diisocyanate being maintained in the range of from about 1:0.95 to 1:1.05; and
said chain extender being selected from diamines, dihydroxy compounds, and mixtures thereof, at least one of said chain extenders containing at least one group selected from in-chain or pendant amines, and pendant carboxylic acid groups, the number of said groups being selected such that, once ionized, said block copolymer has an ionic content of up to about 15%; and
ionizing said organopolysiloxane-polyurea block copolymer.

The combined molar ratio of silicone diamine, diamine and/or dihydroxy chain extender to diisocyanate in the reaction is that suitable for the formation of a block copolymer with desired properties. Preferably the ratio is maintained in the range of about 1:0.95 to 1:1.05.

The diisocyanate useful in the reaction can be a phenylene diisocyanate such as toluene diisocyanate or p-phenylene diisocyanate, hexamethylene diisocyanate, aralkylene diisocyanate such as methylene bis-(phenylisocyanate) or tetramethylxylene diisocyanate, or a cycloalkylene diisocyanate such as isophorone diisocyanate, methylene bis(cyclohexyl) diisocyanate, or cyclohexyl diisocyanate.

The reaction to make the novel block copolymer involves the use of the novel organopolysiloxane diamine represented by Formula II.

A method of making the organopolysiloxane diamine represented by Formula II is also provided. The method involves:
(1) combining under reaction conditions and in an inert atmosphere:
   (a) amine functional endblocker of the molecular structure represented by Formula V, as follows: 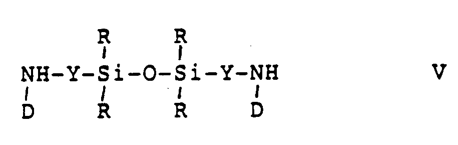 where D and Y are as defined in Formula I, and each R is independently selected from a monovalent alkyl radical having from 1 to about 12 carbon atoms, a substituted alkyl radical having from 1 to about 12 carbon atoms, a phenyl radical and a substituted phenyl radical;
   (b) sufficient cyclic siloxane to react with said amine functional end blocker to form a lower molecular weight organopolysiloxane diamine having a molecular weight less than about 2,000 and a molecular structure represented by Formula VI, as follows: 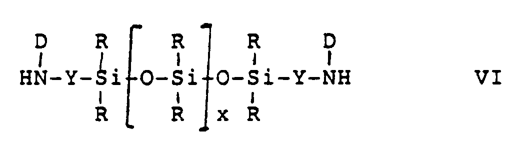 where D, R, and Y are as defined in Formula I of claim 1, and x is a number in the range of 4 to 40;
   (c) a catalytic amount not to exceed about 0.1% by weight based on the ultimate weight of the final organopolysiloxane diamine of an essentially anhydrous amine silanolate catalyst of a molecular structure represented by Formula VII, as follows 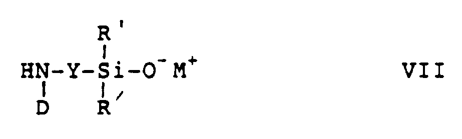 where D and Y are as defined in Formula I and each R' is independently selected from a monovalent alkyl radical having from 1 to 12 carbon atoms, a substituted alkyl radical having from 1 to 12 carbon atoms, a phenyl radical and a substituted phenyl radical,
      and M⁺ is a cation selected from K⁺, Na⁺, or N(CH₃ )+₄; with N(CH₃)₄+ being preferred;
(2) continuing the reaction until substantially, all of the amine functional end blocker is consumed; and
(3) adding additional cyclic siloxane until the organopolysiloxane diamine represented by Formula II is obtained.

The preferred amine silanolate catalyst is 3-amino- propyl dimethyl tetramethylammonium silanolate. The catalytic amount of the amine silanolate catalyst is preferably less than 0.5 weight percent, most preferably 0.005 to about 0.03 weight percent, based upon the ultimate weight of the final organopolysiloxane.

The preferred reaction conditions comprise a reaction temperature range of about 80°C to about 90°C, a reaction time of about 5 to 7 hours, and the dropwise addition of the additional cyclic siloxane.

Water-dispersible organopolysiloxane polyurea block copolymers are also provided. The water-dispersible copolymers are prepared by using chain extenders which introduce ionic groups into the polymer chain. These copolymers comprise the following repeating unit: 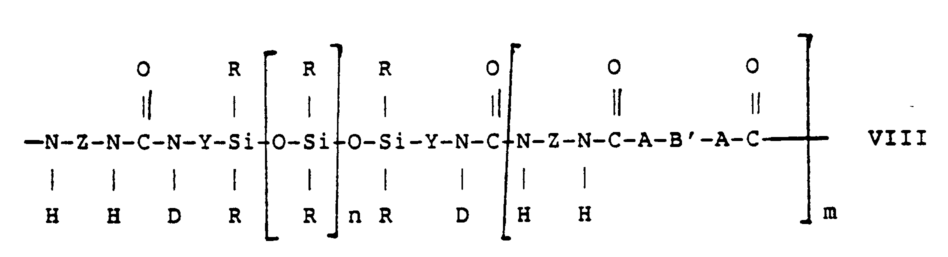
wherein Z, Y, R, D, B', A, n and m are as defined above.

The reaction to produce the block copolymer of the invention involves mixing under reactive conditions the organopolysiloxane diamine, diamine and chain extender, and diisocyanate to produce the block copolymer with hard and soft segments respectively derived from the diisocyanate and organopolysiloxane diamine. The reaction is carried out in a reaction solvent.

Preferred reaction solvents are those which are unreactive with the diisocyanates and which maintain the reactants and products completely in solution throughout the polymerization reaction. It has been found that chlorinated solvents, ethers, and alcohols perform best in the case of aliphatic diisocyanates with methylene chloride, tetrahydrofuran, and isopropyl alcohol being preferred. For aromatic diisocyanates such as 4,4'-methylene-bis-phenyl isocyanate (MDI), a mixture of tetrahydrofuran with 10% to 25% by weight of dipolar aprotic solvent such as dimethyl- formamide is preferred.

The starting materials and reaction solvents are usually initially purified and dried and the reaction is carried out, under an inert atmosphere such as dry nitrogen or argon.

Suitable diisocyanates include toluene diisocyanate and hexamethylene diisocyanate. Preferred diisocyanates include 4,4'-methylene-bis-phenylisocyanate (MDI), 4,4'- methylene-bis (cyclohexyl)diisocyanate (H-MDI) and isophorone diisocyanate.

The chain extender may be short chain diamine such as hexamethylene diamine, xylylene diamine, 1,3-di(4-piperidyl)propane (DIPIP), N(-2-aminoethyl propylmethyldimethoxysilane (DAS), or piperazine for example, with piperidyl propane being preferred.

Polymeric diamines as well as polymeric glycols may also be copolymerized with the polysiloxane diamines, diisocyanates, and other optional non-silicone soft segments as chain extenders to impart additional desirable properties to the silicone polyureas. The resultant copolymeric segments may comprise from as little as 5% to as much as 95% of the copolymer formulation, depending on the properties of the resultant copolymer desired.

Polymeric diamines useful as nonsilicone soft segments are those which can be obtained with functionality approaching 2.0 such as polytetramethylene oxide diamine of from 5,000 to 25,000 molecular weight, with a molecular weight in the range of 8,000 to 15,000 being most preferred. Suitable polymeric diols include polytetramethylene oxide glycol, polyethylene oxide glycol, polyethylene adipate glycol, polypropylene oxide glycol, polybutadiene glycol and polycaprolactone glycol. In preparing the polyureas from a mixture of polysiloxane and polytetramethylene oxide diamines, the diamines are dissolved together in a suitable solvent such as methylene chloride and the diisocyanate and chain extender are introduced into the mixture, at a combined amine to diisocyanate molar ratio of 1:0.95 to 1:1.05. A two stage procedure is required to copolymerize the polymeric glycols with silicone diamines in which the glycol is first heated with the diisocyanate in an inert solvent such as toluene or tetrahydrofuran with a catalytic amount of a tin compound such as stannous octoate or dibutyl tin dilaurate for a sufficient amount of time, e.g., one half to one hour, until all of the alcohol groups have been capped with isocyanate. In the second stage, the polysiloxane diamine is added followed by diamine chain extender to provide the polyether or polyester polyurethane polysiloxane polyurea block copolymer, with the combined molar ratio of amine plus alcohol to isocyanate being held in the range of 1:0.95 to 1:1.05 to provide for complete reaction.

Water-dispersible organopolysiloxane-polyurea block copolymers of the invention are formed by the incorporation of ionic groups along the polymer chain. Several methods are useful for this purpose. The primary method is selection of certain chain extenders according to Formula IV. For example, the use of chain extenders which contain in-chain amine groups, such as N-methyl diethanolamine, bis(3-aminopropyl) piperazine, N-ethyl diethanolamine, and diethylene triamine, provide organpolysiloxane-polyurea block copolymers according to Formula I having reactive amine groups. These amine groups may then be ionized by neutralization with acid to form tertiary ammonium salts. Or, quaternary ammonium ions may be generated by reaction with alkylating agents such as alkyl halides, propiosultone and butyrosultone. Alternatively, organopolysiloxane-containing polymeric quaternary ammonium salts (ionenes) according to Formula I may be prepared by a two step procedure. The first step involves substitution of two moles of a tertiary amino alkyl amine or alcohol, such as 3-dimethylamino propylamine, 1,3-dimethylaminopropanol, or dimethylaminoethanol for one mole of a non-ionic chain extender of Formula IV in the reaction with the diisocyanates of Formula III. This yields a tertiary amine-terminated polyurethane or polyurea. The second step is treatment of the polyurea with a stoichiometric equivalent of reactive dihalide, such as 1,3-bis(bromomethyl) benzene, 1,2-bis(p-bromomethylphenoxy) butane, N,N'-dimethyl-N,N'-bis(p-chloromethylphenyl)urea, 1,4-bis(2-methoxy-5-chloromethylphenoxy) butane, and diethylene glycol-bis(p-chloromethylphenyl) adipamide, either in bulk or, preferably in a solvent at a temperature of from about 25°C to about 125°C. Preferred solvents are polar and aprotic such as dimethylformamide, acetone and ethyl acetate with methyl ethyl ketone and tetrahydrofuran being most preferred. The reaction is stirred under reflux until the viscosity rises sufficiently, as described in U.S. 4,677,182, (Leir et al.), causing chain extension to form an organopolysiloxane polyurea or polyurethane block copolymer according to Formula I which has quaternary ammonium ion links.

In order to achieve water compatibility or dispersibility, a certain minimum ionic content in the block copolymer is required. The exact amount varies with the particular polymer formulation, the molecular weight of the silicone segment, the nature of the copolymeric chain extenders selected, and other features of the individual copolymer. However, the addition of ionic groups, while increasing water miscibility, negatively affects polymer properties. The films made from silicone polyurea block copolymers having an excess of ionic groups will be brittle and easily destroyed or dissolved by any contact with water. The preferred ionic content is the minimum amount required to yield stable aqueous dispersions while maintaining other desirable properties. Quantifying such minimum amount is difficult as the range will vary with each specific polymer system. The portion of the polymer chain to be defined as the ionic content must be determined. Finally, the ionic groups themselves may vary extensively in molecular weight, i.e., simple ammonium ions as opposed to an alkylated ionic group which may include the molecular weight of a long chain alkyl group. Generally, however, considering the weight of the ionic group to include only the simplest of constructions, e.g., a nitrogen atom, two adjacent carbon atoms in the polymer chain, and a halide ion as the molecular weight of the ion, a minimum of about 2% by weight of ionic content will yield a stable dispersion. Preferred copolymers incorporate from about 2% to about 10% ionic content, most preferably, from about 4% to about 8% ionic content, when calculated in this manner. If the ionic content is over about 15%, the polymer becomes too hydrophilic for use in most applications.

In addition to the introduction of cationic ammonium groups to the polymer chain described above, it has also been found that anionic groups may be added to the silicone block copolymers of the invention in order to provide water dispersibility. Where desirable, chain extenders of Formula IV are used which have carboxylic acid groups, such as 2,5-diaminopentanoic acid or 2,2-dimethylol propionic acid, as described in U.S. Pat. No. 4,203,883. The methods of preparation and other requirements are essentially the same for these carboxylic acid containing silicone block copolymers as for the analogous amine functional copolymers described above, i.e, the silicone block copolymer is prepared under anhydrous conditions in a water soluble solvent having a boiling point of less than 100°C. Preferably the carboxylic acid is neutralized with a slight molar excess of a tertiary amine such as triethylamine or trimethylamine during the polymerization or after chain extension is complete, but prior to the dilution with water. A minimum of about 2-3% by weight of carboxylate anion is required for obtaining a stable dispersion, with 4-8% being preferred.

Depending on ionic content and other structural features, these water-borne polymers can be either translucent or milky opaque; however, the films or coatings obtained after drying of the polymer are typically clear and very tough in nature.

The water-dispersible polymers are prepared initially in an un-ionized form by the methods described above, using water soluble solvents having lower boiling points than water. Suitable solvents include 2-butanone, tetrahydrofuran, isopropyl alcohol, or mixtures thereof. The amine containing silicone block copolymer may then be ionized in solution by protonation with stoichiometric amounts of strong acids such as hydrochloric or hydrobromic acid. Alternatively, the copolymer may be ionized by quaternization with an appropriate alkyl halide. The solution can then be diluted with water with vigorous agitation and the solvent evaporated under reduced pressure to give a completely aqueous dispersion of the ionized polymer. Although infinitely dilutable with water, most copolymers begin to reach their solubility limits at about 35-40% by weight. Preferred concentrations of water are from about 10% to about 25%. If desired for a particular application, the amine-containing or carboxylic acid group-containing polymer can be utilized in un-ionized form and coated from solvent.

As previously mentioned, the reaction to produce the organopolysiloxane diamine preferably employs an anhydrous amine functional silanolate catalyst represented by Formula VII. The preferred catalyst in this polymerization is 3-aminopropyl dimethyl tetramethylammonium silanolate as disclosed in EP-A-250,248 (supra) and obtained as a crystalline solid from the reaction of one molar equivalent of 1,3 bis-(3-aminopropyl) tetramethyldisiloxane with 2 molar equivalents of tetra- methylammonium hydroxide pentahydrate in tetrahydrofuran under reflux, followed by drying under 13Pa (0.1mm) vacuum for 5 hours at 60°C.

In the first stage of the reaction, a low molecular weight silicone diamine having a structure as defined by Formula VI is prepared by reacting an amine functional disiloxane endblocker of the type represented by Formula V with a cyclic siloxane in the presence of a catalytic amount of anhydrous amine functional silanolate represented by Formula VII in an inert atmosphere such as nitrogen or argon. The amount of catalyst employed should desirably be less than 0.05 weight percent, preferably 0.005 to about 0.03 weight percent, by weight of the resultant diamino silicone. While not wanting to be bound by theory, it is thought that, by using a minimum amount of an anhydrous amine functional silanolate catalyst, the number of inactive chain ends that are produced by catalyst molecules and spurious water are held to a minimum.

The reaction is typically carried out in bulk at a temperature of 80-90°C, and under these conditions is usually complete in about 0.5-2 hours, as judged by substantially complete disappearance of the endblocker of the reaction mixture as determined by vapor phase chromatography. An intermediate organopolysiloxane diamine is obtained having a molecular weight of less than about 2,000 and a molecular structure represented by Formula VI.

The second stage of the reaction involves the slow addition of the remainder of the cyclic siloxane required to achieve the desired molecular weight, preferably dropwise addition, at such a rate that the cyclic siloxane is incorporated into the polymer about as fast as it is added, usually in about 5 to 7 hours at the reaction temperature of 80-90°C. The desired organopolysiloxane diamine is produced having a molecular weight in excess of 5,000 and a structure as defined by Formula II. By utilizing this two-stage method with a minimum amount of amine functional anhydrous silanolate catalyst, (as is disclosed in EP-A-250,248, supra) silicone diamines of Formula II may be consistently prepared in any desired molecular weight from about 5,000 to about 70,000 having excellent difunctionality with little contamination from monofunctional and nonfunctional polysiloxane impurities.

The prior art method for the preparation of amine terminated silicones from the equilibration of cyclic siloxanes, amine functional disiloxanes and basic catalysts such as tetramethyl ammonium hydroxide or siloxanolate has proven unsatisfactory for obtaining diamino organopolysiloxanes of molecular weight in excess of 4,000 with good difunctionality. These poor results are thought to be caused by a number of deleterious factors inherent in the previous methods, which include running the reaction in a single stage or all at once with the catalyst, amine functional endblocker and all the cyclic siloxane together. This results in incomplete incorporation of endblocker and higher than calculated molecular weights. The use of an excessive amount of a nonfunctional hydrated catalyst produces a significant percentage of non-amine terminated silicone polymers as impurities in the final product. These results are obviated in the preferred method of the present invention by the use of an essentially anhydrous amine functional catalyst at a minimum concentration in a two-stage reaction as described above.

Preferred embodiments of this invention are described below with reference to the following examples which are not intended to be limiting in scope.

Silicone diamine was prepared by the method of Example 2 of EP-A-250,248.

### EXAMPLE 1

### Preparation of a water-borne, Carboxylate Ion-containing Silicone Block Copolymer

A solution of 20.38 g isophorone diisocyanate in 150 g 2-butanone (MEK) at 25°C was treated successively with 50 g diamino silicone having a molecular weight of 5014 in 75 g MEK and 20.0 g polypropylene oxide diamine having a molecular weight of 2000, commercially available as Jeffamine™ D-2000 from Texaco, in 50 g MEK. To the resulting clear solution was added a solution of 9.62 g 2,2-dimethylol propionic acid and 8.0 g triethylamine in 25 g MEK. Three drops of dibutyl tin dilaurate catalyst was added and the reaction was heated under reflux. After 5 hours, the solution had become very viscous and hazy. It was cooled to near ambient temperature and poured with vigorous agitation into 1100 ml H₂O. Evaporation of MEK and concentration to a total of 1900 g on a rotary evaporator yielded the product as a milky white suspension, 10% solids in water. Films or coatings of this block polymer, which has a formulation of 50% silicone, 20% polypropylene oxide and 30% hard segment, dried upon casting to form a clear, strong elastomeric material.

### EXAMPLE 2

### Preparation of a Water-Miscible Silicone Block Copolymer Containing Ionene Links

To a solution of 65.0 g silicone diamine having a molecular weight of 5,014, 58 g N,N'-bis (3-aminopropyl) piperazine, and 5.7 g 3-dimethylaminopropylamine in 200 g isopropyl alcohol was added dropwise rapidly with stirring under argon 15.75 g isophorone diisocyanate at 25°C. The mildly exothermic reaction was stirred for 15 minutes after addition was complete; the solution remained clear, with little rise in viscosity. To the intermediate dimethylamine terminated silicone polyurea produced by this reaction was added all at once a solution of α,α'-dibromo-m-xylene in 100 g isopropyl alcohol. The reaction was stirred and heated at reflux. After approximately 2 hours, the viscosity had risen to the point where stirring was difficult. One such solution, upon cooling to ambient temperature, was cast to yield a clear, strong silicone polyurea ionene elastomer film. Another such solution was dispersed into water by pouring the isopropyl alcohol solution of ionene into 800 ml water with vigorous agitation. Transfer was completed with 200 ml water, and the resultant translucent mixture was concentrated under reduced pressure to a final weight of 1,000 g. This removed the isopropyl alcohol, and yielded a silicone polyurea ionene as a completely aqueous dispersion having a concentration of 10% by weight. Cast films dried rapidly to clear elastomeric silicone polyurea ionene coatings.

### EXAMPLE 3

### Preparation of a Water-Borne Silicone Block Copolymer by Protonation of Tertiary Amine Containing Segments

A solution of 20.0 g polybutadiene diol of 1,454 MW, available as Polybd™ R-45M from ARCO Chemical Co., and 18.28 g isophorone diisocyanate in 200 g 2-butanone was stirred and heated under reflux with 3 drops of dibutyltin dilaurate catalyst under argon for 3 hours. The reaction was cooled to room temperature, and a solution of 50.0 g silicone diamine of 5,014 MW in 50 g 2-butanone was added rapidly. To the resulting clear solution was added dropwise with rapid stirring, a solution of 11.72 g N,N'-bis(3-aminopropyl) piperazine. The viscosity of the reaction mixture rose rapidly, but the solution remained clear. After 15 minutes, the block copolymer, having a composition of 50% silicone, 20% polybutadiene and 30% hard segment, was acidified with 19.5 ml of 6N HCl. The solution became hazy, followed rapidly by the formation of a globular precipitate. This was readily dispersed by pouring into 1,100 ml water with rapid agitation. The solvent was stripped under vacuum and concentrated to 1,000 g to yield a milky-white, stable dispersion in water at 10% solids. Cast films were clear, yet somewhat brittle. However, coatings showed excellent adhesion to polyester (PET) film.

### EXAMPLE 4

### Preparation of a Water-Dispersed Silicone Polyurea and Post-Curing of the Cast Film

A solution of 15.0 g of amine terminated polypropylene oxide having a molecular weight of 2,000 (Jeffamine™, D-2000), 50.0 g silicone diamine with a molecular weight of 5,014, and 13.0 g N,N'-bis (3-aminopropyl) piperazine in 250 ml isopropyl alcohol was treated dropwise with 22.0 g isophorone diisocyanate. The temperature was held at 25-30°C during the addition by means of a water bath. After addition was complete, the clear, highly viscous solution was stirred for 15 minutes. 22 ml of 6N HCl was added and the mixture thickened almost to a paste. Dilution with 1,100 ml H₂O and concentration to 10% solids gave the silicone polyether polyurea as a translucent dispersion in water. Films obtained after casting were crosslinked during drying by adding a 10% aqueous solution of N,N'-bis(hydroxymethyl) ethylene urea (0.156 g per 1.0 g polymer dispersion) and a catalytic amount of ZnCl₂ (0.1%, based on solids) prior to coating. Such coatings were clear, very tough, insoluble in solvents and water, and exhibited excellent adhesion to surfaces such as PET.

### EXAMPLE 5

### Preparation of a Water-Borne Silicone Polyurea Copolymer and its Performance as a Low Adhesion Release Surface

A polyurea block copolymer of the composition 20% silicone, 50% polypropylene oxide, and 30% tertiary amine containing hard segment was prepared according to the method of Example 4 from the reaction of a mixture of 10.0 g Jeffamine™ D-2000, 4.0 g silicone diamine of 5014 molecular weight, 2.27 g N,N'-bis(3-aminopropyl)piperazine in 60 g isopropyl alcohol with 3.77 g IPDI. The viscous polyurea solution was neutralized with a solution of 1.85 ml concentrated HCl in 5 ml isopropyl alcohol. Dilution with water and concentration to 10% solids in the usual manner gave an almost clear aqueous dispersion of the silicone block polymer.

A uniform coating of this dispersion was applied to 1.5 mil polyester (PET) film using a #3 Meyer rod (0.027 wet mil thickness). The coated film was dried for 1/2 hour at 65°C and aged for 24 hours at 22°C/50% RH. The performance of the clear, coated film as a release surface for pressure-sensitive adhesive tape was determined using two standard test methods as described by the American Society of Testing and Materials (ASTM) of Philadelphia, Pennsylvania and the Pressure Sensitive Tape Council (PSTC) of Glenview, Illinois. These are Procedures No. 1 (peel adhesion) and No. 7 (shear strength).

### Peel Adhesion ASTM P3330-78 PSTC-1 (11/75)

Peel adhesion is the force required to remove a coated flexible sheet material from a test panel measured at a specific angle and rate of removal. In the examples this force is expressed in Newtons per 100 mm (N/100 mm) width of coated sheet. The procedure follows:
1. A 12.5 mm width of the coated sheet is applied to the horizontal surface of a clean glass test plate with at least 12.7 lineal cm in firm contact. A hard rubber roller is used to apply the strip.
2. The free end of the coated strip is doubled back nearly touching itself, so the angle of removal will be 180°. The free end is attached to the adhesion tester scale.
3. The glass test plate is clamped in the jaws of the tensile testing machine which is capable of moving the plate away from the scale at a constant rate of 2.3 meters per minute.
4. The scale reading in Newtons is recorded as the tape is peeled from the glass surface. The data is recorded as the average value of the range of numbers observed during the test.

### Shear Holding Strength (Reference: ASTM: D3654-78; PSTC-7)

The shear strength is a measure of the cohesiveness or internal strength of an adhesive. It is based upon the amount of force required to pull an adhesive strip from a standard flat surface in a direction parallel to the surface to which it has been affixed with a definite pressure. it is measured in terms of time (in minutes) required to pull a standard area of adhesive coated sheet material from a stainless steel test panel under stress of a constant, standard load.

The tests were conducted on adhesive coated strips applied to a stainless steel panel such that a 12.5 mm portion of each strip was in firm contact with the panel with one end portion of the tape being free. The panel with coated strip attached was held in a rack such that the panel forms an angle of 178° with the extended tape free end which is then tensioned by application of a force of one kilogram applied as a hanging weight from the free end of the coated strip. The 2° less than 180° is used to negate any peel forces thus insuring that only the shear forces are measured in an attempt to more accurately determine the holding power of the tape being tested. The time elapsed for each tape example to separate from the test panel is recorded as the shear strength.

Two types of tapes were utilized: a natural rubber/resin latex masking tape and a Kraton™ 1107/resin on biaxially-oriented polypropylene (BOPP) backing. Release and re-adhesion values are summarized in Table I.

**TABLE I**

| Peel Adhesion (N/100mm) | | | | |
|---|---|---|---|---|
| Tape | Initial | | Aged (3 days, 22°C, 50% RH) | |
| | To Film | To Glass | To Film | To Glass |
| Rubber/Resin | 4.8 | 44.2 | 23.2 | 30.7 |
| Kraton™ 1107/Resin | 0.7 | 81.0 | 36.3 | 70.0 |

## Claims

1. A water-dispersible organopolysiloxane-polyurea block copolymer comprising the following repeating unit: 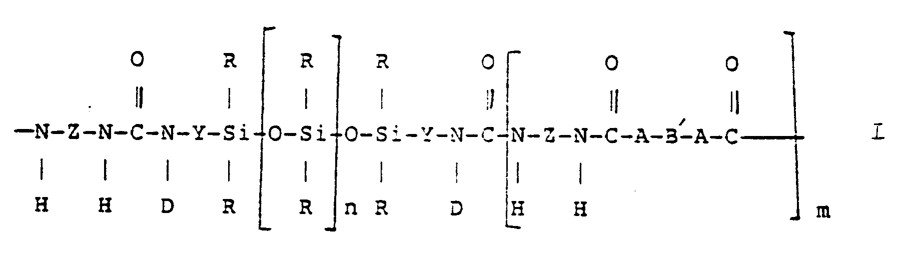 where:
Z is a divalent radical selected from phenylene, alkylene, aralkylene and cycloalkylene;
Y is an alkylene radical of 1 to 10 carbon atoms;
R is at least 50% methyl with the balance of the 100% of all R radicals being selected from a monovalent alkyl radical having from 2 to 12 carbon atoms, a substituted alkyl radical having from 2 to 12 carbon atoms, a vinyl radical, a phenyl radical, and a substituted phenyl radical;
D is selected from hydrogen, an alkyl radical of 1 to 10 carbon atoms, and phenyl;
B' is selected from alkylene, aralkylene, cycloalkylene, phenylene, polyethylene oxide, polypropylene oxide, polytetramethylene oxide, polyethylene adipate, polycaprolactone, polybutadiene, mixtures thereof, and a radical which completes a ring structure including A to form a heterocycle, which contains a sufficient number of in-chain or pendant ammonium ions or pendant carboxylate ions to render the block copolymer water-dispersible, the block copolymer having an ionic content of said ions not greater than about 15%;
A is selected from -O-, and 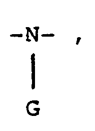 where G is selected from hydrogen, an alkyl radical of 1 to 10 carbon atoms, a phenyl group , and a radical which completes a ring structure including B' to form a heterocycle;
n is a number which is 10 or larger, and
m is a number, other than zero, of up to 25.

2. A method of making a water-dispersible organopolysiloxane-polyurea block copolymer as claimed in claim 1, said method comprising polymerizing a silicone diamine with at least one diisocyanate in the presence of up to 95 weight percent chain extender under an inert atmosphere in a water soluble solvent, said solvent having a boiling point of less than 100°C, said silicone diamine having the following general formula: 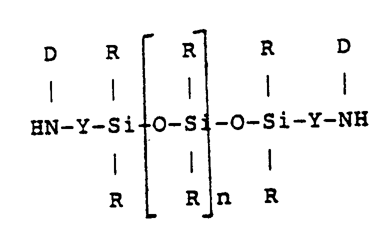 where R, Y and D and n are as defined in claim 1, and said at least one diisocyanate having the formula:
OCN-Z-NCO
where Z is as defined in claim 1; the molar ratio of diamine to diisocyanate being maintained in the range of from about 1:0.95 to 1:1.05; and
said chain extender being selected from diamines, dihydroxy compounds, and mixtures thereof, at least one of said chain extenders containing at least one group selected from in-chain or pendant amines, and pendant carboxylic acid groups, the number of said groups being selected such that, once ionized, said block copolymer has an ionic content of up to about 15%; and
ionizing said organopolysiloxane-polyurea block copolymer.

3. A method as claimed in claim 2 wherein said silicone diamine is made by
(1) combining under reaction conditions and in an inert atmosphere:
(a) amine functional endblocker of the molecular structure represented by Formula V, as follows: 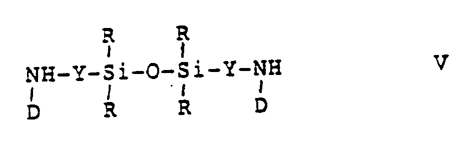 where D and Y are as defined in Formula I of claim 1, and each R is independently selected from a monovalent alkyl radical having from 1 to about 12 carbon atoms, a substituted alkyl radical having from 1 to about 12 carbon atoms, a phenyl radical and a substituted phenyl radical;
(b) sufficient cyclic siloxane to react with said amine functional end blocker to form a lower molecular weight organopolysiloxane diamine having a molecular weight less than about 2,000 and a molecular structure represented by Formula VI, as follows: 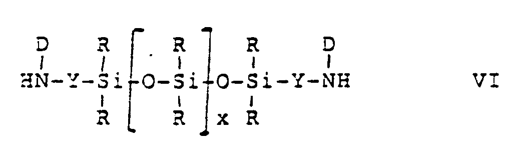 where D, R, and Y are as defined in Formula I of claim 1 and x is a number in the range of 4 to 40;
(c) a catalytic amount not to exceed about 0.1% by weight based on the ultimate weight of the final organopolysiloxane diamine of an essentially anhydrous amine silanolate catalyst of a molecular structure represented by Formula VII, as follows 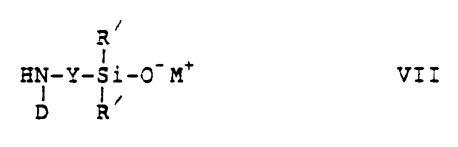 where D and Y are as defined in Formula I at claim 1, and each R' is independently selected from a monovalent alkyl radical having from 1 to 12 carbon atoms, a substituted alkyl radical having from 1 to 12 carbon atoms, a phenyl radical and a substituted phenyl radical,
and M⁺ is a cation selected from K⁺, Na⁺, or N(CH₃)+₄;
(2) continuing the reaction until substantially, all of the amine functional end blocker is consumed; and
(3) adding additional cyclic siloxane until the organopolysiloxane diamine represented by Formula II is obtained.

4. A method according to claim 2 or claim 3 wherein said organopolysiloxane-polyurea block copolymer is ionized by treatment with an hydrochloric acid or hydrobromic acid, or an alkylating agent selected from alkyl halides, propiosultone, and butyrosultone.

5. A method according to claim 2 or claim 3 wherein said organopolysiloxane-polyurea block copolymer is ionized by treatment with triethylamine or trimethylamine.

6. A method according to any of claims 2 to 5 wherein said chain extender is selected from N-methyl diethanolamine, bis(3-aminopropyl) piperazine, N-ethyl diethanolamine, diethylene triamine of 2,5-diaminopentanoic acid and 2,2-dimethylol propionic acid.

7. A method of making a water-dispersible organopolysiloxane-polyurea block copolymer having quaternary ammonium ion linkages according to claim 2 wherein two moles of a tertiary amine selected from tertiary amino alkyl amines and tertiary amino alkanols are substituted for one mole of said chain extender to produce a tertiary amine-terminated polyurethane or polyurea polymer, and said polymer is then treated with a stoichiometric equivalent of a reactive dihalide.

8. A method according to claim 7 wherein said reactive dihalide is 1,3-bis(bromomethyl) benzene, 1,2-bis(p-bromomethylphenoxy) butane, N,N'-dimethyl-N,N'-bis(p-chloromethylphenyl)urea, 1,4-bis(2-methoxy-5-chloromethylphenoxy) butane, or diethylene glycol-bis(p-chloromethylphenyl) adipamide, and said tertiary amine is selected from 3-dimethylamino propylamine, 1,3-dimethylaminopropanol and dimethylaminocthanol.

9. A film comprising a water-dispersible organopolysiloxane-polyurea block copolymer of claim 1.

10. A sheet material at least partially coated on at least one major surface with the film of claim 8.

11. An organopolysiloxane-polyurea block copolymer according to claim 1 wherein B' is selected from alkylene, aralkylene, cycloalkylene, phenylene, polyethylene oxide, polypropylene oxide, polytetramethylene oxide, polyethylene adipate, polycaprolactone, polybutadiene, mixtures thereof, and a radical which completes a ring structure including A to form a heterocycle, said group containing in-chain or pendant amine groups or pendant carboxylic acid groups.

## Patentansprüche

1. Wasserdispergierbares Organopolysiloxan/Polyharnstoff-Blockcopolymer, umfassend die folgende repetierende Einheit: 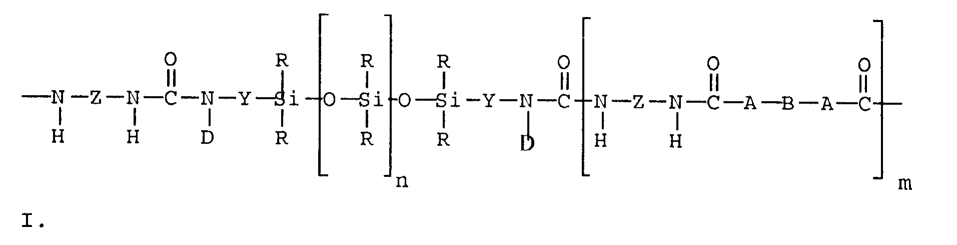 worin sind:
Z ein zweiwertiges Radikal, ausgewählt aus Phenylen, Alkylen, Aralkylen und Cycloalkylen;
Y ein Alkylen-Radikal mit 1 bis 10 Kohlenstoffatomen;
R mindestens 50 % Methyl, wobei der Rest auf 100 Prozent aller Radikale R ausgewählt wird aus einem einwertigen Akyl-Radikal mit 2 bis 12 Kohlenstoffatomen, einem substituierten Akyl-Radikal mit 2 bis 12 Kohlenstoffatomen, einem Vinyl-Radikal, einem Phenyl-Radikal und einem substituierten Phenyl-Radikal;
D ausgewählt aus Wasserstoff, einem Alkyl-Radikal mit 1 bis 10 Kohlenstoffatomen und Phenyl;
B' ausgewählt aus: Alkylen, Aralkylen und Cycloalkylen, Phenylen, Polyethylenoxid, Polypropylenoxid, Polytetramethylenoxid, Polyethylenadipat, Polycaprolacton, Polybutadien, Mischungen davon, und ein Radikal, welches eine Ringstruktur schließt, einschließend A, um einen Heterocyclus zu bilden, enthaltend eine ausreichende Zahl von in der Kette liegenden oder als Seitengruppe anhängenden Ammonium-Ionen oder als Seitengruppe anhängenden Carboxylat-Ionen, um das Blockcopolymer wasserdispergierbar zu machen, wobei das Blockcopolymer einen Gehalt an diesen Ionen aufweist, der nicht größer ist als etwa 15 Prozent;
A ausgewählt aus -O- und 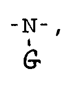 worin G ausgewählt wird aus Wasserstoff, einem Alkyl-Radikal mit 1 bis 10 Kohlenstoffatomen, einer Phenyl-Gruppe und einem Radikal, welches eine Ringstruktur schließt, einschließend B'zur Bildung eines Heterocyclus;
n eine Zahl, die 10 beträgt oder größer ist;
m eine von Null verschiedene Zahl bis 25.

2. Verfahren zum Herstellen eines wasserdispergierbaren Organopolysiloxan/Polyharnstoff -Blockcopolymers nach Anspruch 1, welches Verfahren umfaßt:
Polymerisieren eines Silicondiamins mit mindestens einem Diisocyanat in Gegenwart von bis zu 95 Gewichtsprozent Kettenverlängerer unter einer inerten Atmosphäre in einem wasserlöslichen Lösemittel, welches Lösemittel eine Siedepunkt von weniger als 100 °C aufweist und welches Silicondiamin die folgende allgemeine Formel hat: 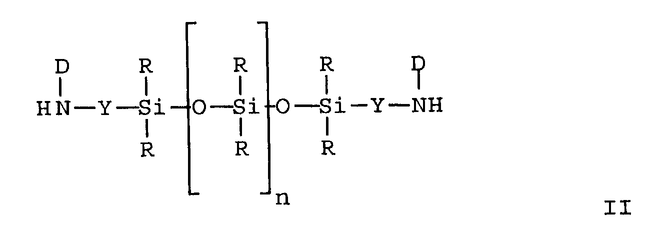 darin sind R, Y, D und n wie in Anspruch 1 festgelegt, wobei das mindestens eine Diisocyanat die Formel hat:
OCN-Z-NCO
worin Z wie in Anspruch 1 festgelegt ist; wobei das Molverhältnis von Diamin zu Diisocyanat im Bereich von etwa 1:0,95 ... 1:1,05 gehalten wird und wobei der Kettenverlängerer ausgewählt wird aus Diaminen, Dihydroxy-Verbindungen und deren Mischungen, wobei mindestens einer der Kettenverlängerer mindestens eine Gruppe enthält, ausgewälht aus in der Kette liegenden oder als Seitengruppe anhängenden Aminen und als Seitengruppe anhängenden Cabonsäure-Gruppen, wobei die Zahl dieser Gruppen derart ausgewählt wird, daß das Blockcopolymer, nachdem es ionisiert ist, einen Ionengehalt von bis zu etwa 15 Prozent aufweist;
Ionisieren des Organopolysiloxan/Polyharnstoff-Blockcopolymers.

3. Verfahren nach Anspruch 2, bei welchem das Silicondiamin hergestellt wird durch:
(1) Vereinigen Unter Reaktionsbedingungen und in einer inerten Atmosphäre von:
(a) aminfunktionellem Endblocker der durch Formel V dargestellten Molekülstruktur: 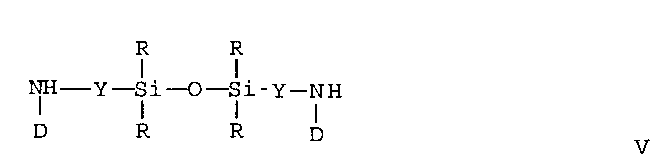 worin D und Y wie in Formel I von Anspruch 1 festgelegt sind und jedes R unabhängig ausgewählt wird aus einem einwertigen Alkyl-Radikal mit 1 bis etwa 12 Kohlenstoffatomen, einem substituierten Alkyl-Radikal mit 1 bis etwa 12 Kohlenstoffatomen, einem Phenyl-Radikal und einem substituierten Phenyl-Radikal;
(b) ausreichendem, cyclischen Siloxan, um mit dem aminfunktionellen Endblocker unter Bildung eines niedermolekularen Organopolysiloxandiamins zu reagieren, welches Organopolysiloxandiamin eine relative Molekülmasse von weniger als 2.000 und eine Molekülstruktur hat, die durch die Formel VI dargestellt wird: 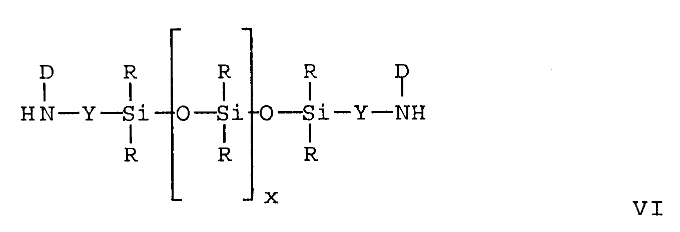 worin D, R und Y wie in Formel I von Anspruch 1 festgelegt sind und x eine Zahl im Bereich von 4 bis 40 ist;
(c) eine etwa 0,1 Gewichtsprozent, bezogen auf das Endgewicht des fertigen Organopolysiloxandiamins, nicht überschreitende katalytische Menge eines im wesentlichen wasserfreien Aminsilanolat-Katalysators einer Molekül-struktur, die durch die Formel VII dargestellt wird: 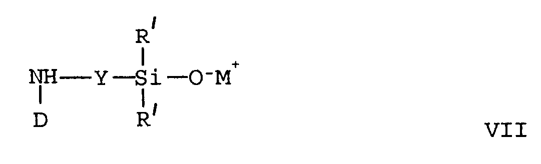 worin D und Y wie in Formel I von Anspruch 1 festgelegt sind und jedes R' unabhängig ausgewählt wird aus einem einwertigen Alkyl-Radikal mit 1 bis etwa 12 Kohlenstoffatomen, einem substituierten Alkyl-Radikal mit 1 bis etwa 12 Kohlenstoffatomen, einem Phenyl-Radikal und einem substituierten Phenyl-Radikal, und M⁺ ein Kation ist, ausgewählt aus K⁺, Na⁺ oder N(CH₃)₄⁺;
(2) Fortführen der Reaktion, bis im wesentlichen der gesamte aminfunktionelle Endblocker verbraucht ist; und
(3) Zusetzen von weiterem cyclischen Siloxan, bis das durch Formel II dargestellte Organopolysiloxandiamin erhalten worden ist.

4. Verfahren nach Anspruch 2 oder 3, bei welchem das Organopolysiloxan/Polyharnstoff-Blockcopolymer durch Behandlung mit einer Chlorwasserstoffsäure oder Bromwasserstoffsäure oder einem Alkylierungsmittel, ausgewählt aus Alkylhalogeniden, 1,3-Propansulton und 2,4-Butansulton, ionisiert wird.

5. Verfahren nach Anspruch 2 oder 3, bei welchem das Organopolysiloxan/Polyharnstoff-Blockcopolymer durch Behandlung mit Triethylamin oder Trimethylamin ionisiert wird.

6. Verfahren nach Anspruch 2 bis 5, bei welchem der Kettenverlängerer ausgewählt wird aus N-Methyldiethanolamin, Bis(3-aminopropyl)piperazin, N-Ethyldiethanolamin, Diethylentriamin der 2,5-Diaminpentansäure und 2,2-Dimethylolpropansäure.

7. Verfahren zum Herstellen eines wasserdispergierbaren, quaternäre Ammoniumion-Bindungen aufweisenden Organopolysiloxan/Polyharnstoff-Blockcopolymers nach Anspruch 2, bei welchem zwei Mole eines tertiären Amins, ausgewählt aus tertiären Aminoalkylaminen und tertiären Aminoalkanolen, für ein Mol des Kettenverlängerers ersetzt werden, um ein tertiäres, aminterminiertes Polyurethan- oder Polyharnstoffpolymer zu erzeugen, wonach das Polymer mit einem stöchiometrischen Äquivalent eines reaktionsfähigen Dihalogenids behandelt wird.

8. Verfahren nach Anspruch 7, bei welchem das reaktionsfähige Dihalogenid 1,3-Bis(brommethyl)benzol, 1,2-Bis(p-brommethylphenoxy)butan, N,N'-Dimethyl-N,N'-bis(p-chlormethylphenyl)harnstoff, 1,4-Bis(2-methoxy-5-chlormethylphenoxy)butan oder Diethylenglykol-bis-(p-chlormethylphenyl)adipamid ist und das tertiäre Amin ausgewählt wird aus 3-Dimethylaminopropylamin, 1,3-Dimethylaminopropanol und Dimethylaminoethanol.

9. Film, umfassend ein wasserdispergierbares Organopolysiloxan/Polyharnstoff-Blockcopolymer nach Anspruch 1.

10. Flächengebilde, mindestens teilweise auf einer seiner größeren Oberfächen beschichtet mit dem Film nach Anspruch 8.

11. Organopolysiloxan/Polyharnstoff-Blockcopolymer nach Anspruch 1, worin B' ausgewählt wird aus Alkylen, Aralkylen, Cycloalkylen, Phenylen, Polyethylenoxid, Polypropylenoxid, Polytetramethylenoxid, Polyethylenadipat, Polycaprolacton, Polybutadien, deren Mischungen, und ein Radikal, das eine Ringstruktur schließt, einschließend A, um einen Heterocyclus zu bilden, welche Gruppe in der Kette liegende oder als Seitengruppe anhängenden Amingruppen oder als Seitengruppe anhängenden Carbonsäure-Gruppen enthält.

## Revendications

1. Copolymère organopolysiloxane-polyurée séquencé dispersible dans l'eau, comprenant l'unité répétée suivante : 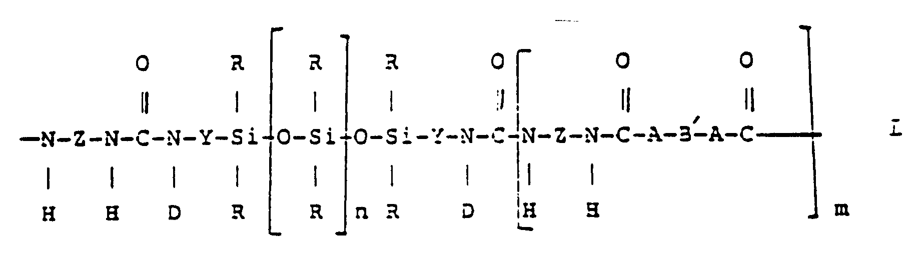 où :
Z est un radical divalent choisi parmi les radicaux phénylène, alkylène, aralkylène et cycloalkylène ;
Y est un radical alkylène de 1 à 10 atomes de carbone ;
R est au moins à 50 % des radicaux méthyles, le reste des 100 % de tous les radicaux R étant choisi parmi un radical alkyle monovalent ayant de 2 à 12 atomes de carbone, un radical alkyle substitué ayant de 2 à 12 atomes de carbone, un radical vinyle, un radical phényle et un radical phényle substitué ;
D est choisi parmi un hydrogène, un radical alkyle de 1 à 10 atomes de carbone et un radical phényle ;
B' est choisi parmi les groupes alkylène, aralkylène, cycloalkylène, phénylène, un oxyde de polyéthylène, un oxyde de polypropylène, un oxyde de polytétraméthylène, un adipate de polyéthylène, une polycaprolactone, un polybutadiène et les mélanges de ceux-ci, et un radical qui complète une structure cyclique incluant A pour former un hétérocycle, qui contient un nombre suffisant d'ions ammoniums dans la chaîne ou pendants, ou d'ions carboxylates pendants pour rendre le copolymère séquencé dispersible dans l'eau, le copolymère séquencé ayant une teneur en ions, desdits ions, non supérieure à environ 15 % ;
A est choisi dans le groupe constitué de -O- et de 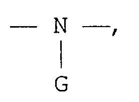 où G est choisi parmi l'hydrogène, un radical alkyle de 1 à 10 atomes de carbone, un groupe phényle et un radical qui complète une structure cyclique incluant B' pour former un hétérocycle ;
n est un nombre qui est 10 ou plus, et
m est un nombre, autre que zéro, jusqu'à 25.

2. Procédé de préparation d'un copolymère organopolysiloxane-polyurée séquencé dispersible dans l'eau selon la revendication 1, ledit procédé comprenant la polymérisation d'une silicone diamine avec au moins un diisocyanate, en présence de jusqu'à 95 % en poids d'allongeur de chaîne, sous une atmosphère inerte, dans un solvant hydrosoluble, ledit solvant ayant un point d'ébullition inférieur à 100 °C, ladite silicone diamine ayant la formule générale suivante : 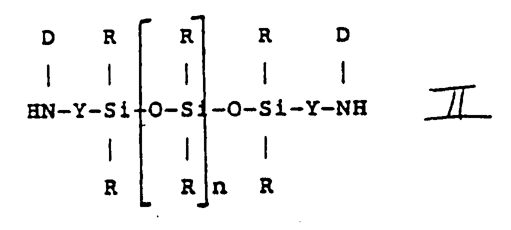 où R, Y, D et n sont tels que définis dans la revendication 1, et ledit au moins un diisocyanate ayant la formule :
OCN-Z-NCO
où Z est tel que défini dans la revendication 1 ; le rapport molaire de la diamine au diisocyanate étant maintenu dans la gamme d'environ 1:0,95 à 1:1,05 ; et
ledit allongeur de chaîne étant choisi parmi les diamines, les composés dihydroxylés et les mélanges de ceux-ci, au moins l'un desdits allongeurs de chaîne contenant au moins un groupe choisi parmi les amines dans la chaîne ou pendantes et les groupes acides carboxyliques pendants, le nombre desdits groupes étant choisi de sorte que, une fois ionisé, ledit copolymère séquencé ait une teneur en ions jusqu'à environ 15 % ; et
l'ionisation dudit copolymère organopolysiloxane-polyurée séquencé.

3. Procédé selon la revendication 2, dans lequel ladite silicone diamine est préparée par
(1) la combinaison dans des conditions de réaction et dans une atmosphère inerte :
(a) d'un agent bloquant les extrémités, à fonction amine, de la structure moléculaire représentée par la formule V, comme suit : 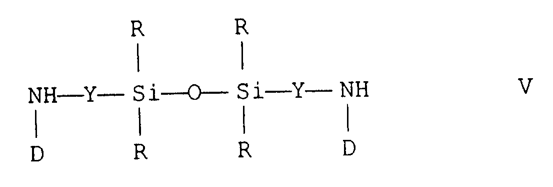 où D et Y sont tels que définis dans la formule I de la revendication 1, et chaque R est indépendamment choisi parmi un radical alkyle monovalent ayant de 1 à environ 12 atomes de carbone, un radical alkyle substitué ayant de 1 à environ 12 atomes de carbone, un radical phényle et un radical phényle substitué ;
(b) de suffisamment de siloxane cyclique pour réagir avec ledit agent bloquant les extrémités à fonction amine, pour former une organopolysiloxane diamine de plus bas poids moléculaire, ayant un poids moléculaire inférieur à environ 2 000 et une structure moléculaire représentée par la formule VI, comme suit : 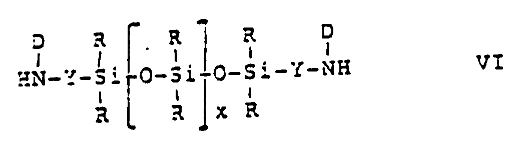 où D, R et Y sont tels que définis dans la formule I de la revendication 1, et x est un nombre dans la gamme de 4 à 40 ;
(c) d'une quantité catalytique ne devant pas dépasser environ 0,1 % en poids, sur la base du poids ultime de l'organopolysiloxane diamine finale, d'un catalyseur silanolate d'amine essentiellement anhydre, d'une structure moléculaire représentée par la formule VII, comme suit 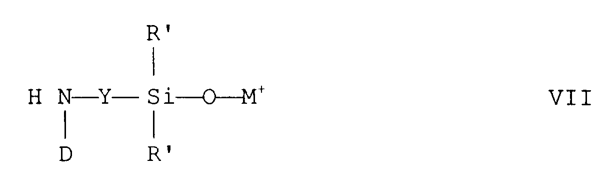 où D et Y sont tels que définis dans la formule I de la revendication 1 et chaque R' est indépendamment choisi parmi un radical alkyle monovalent ayant de 1 à 12 atomes de carbone, un radical alkyle substitué ayant de 1 à 12 atomes de carbone, un radical phényle et un radical phényle substitué,
et M⁺ est un cation choisi parmi K⁺, Na⁺ et N(CH₃)₄⁺ ;
(2) la poursuite de la réaction jusqu'à ce que substantiellement tout l'agent bloquant les extrémités à fonction amine soit consommé ; et
(3) l'addition de siloxane cyclique supplémentaire jusqu'à ce qu'on obtienne l'organopolysiloxane diamine représentée par la formule II.

4. Procédé selon la revendication 2 ou la revendication 3, dans lequel ledit copolymère organopolysiloxane-polyurée séquencé est ionisé par traitement avec de l'acide chlorhydrique ou de l'acide bromhydrique, ou un agent alkylant choisi parmi les halogénures d'alkyle, la propiosultone et la butyrosultone.

5. Procédé selon la revendication 2 ou la revendication 3, dans lequel ledit copolymère organopolysiloxane-polyurée séquencé est ionisé par traitement avec de la triéthylamine ou de la triméthylamine.

6. Procédé selon l'une quelconque des revendications 2 à 5, dans lequel ledit allongeur de chaîne est choisi parmi la N-méthyldiéthanolamine, la bis(3-aminopropyl)pipérazine, la N-éthyldiéthanolamine, la diéthylènetriamine, ou l'acide 2,5-diaminopentanoïque et l'acide 2,2-diméthylolpropionique.

7. Procédé de préparation d'un copolymère organopolysiloxane-polyurée séquencé dispersible dans l'eau, ayant des liaisons d'ions ammonium quaternaire selon la revendication 2, dans lequel deux moles d'une amine tertiaire choisie parmi les aminoalkylamines tertiaires et les aminoalcanols tertiaires remplacent une mole dudit allongeur de chaîne pour produire un polymère polyuréthanne ou polyurée à terminaisons amines tertiaires, et ledit polymère est ensuite traité avec un équivalent stoechiométrique d'un dihalogénure réactif.

8. Procédé selon la revendication 7, dans lequel ledit dihalogénure réactif est le 1,3-bis(bromométhyl)benzène, le 1,2-bis(p-bromométhylphénoxy)butane, la N,N'-diméthyl-N,N'-bis(p-chlorométhylphényl)urée, le 1,4-bis(2-méthoxy-5-chlorométhylphénoxy)butane et le diéthylèneglycol-bis(p-chlorométhylphényl)adipamide, et ladite amine tertiaire est choisie parmi la 3-diméthylaminopropylamine, le 1,3-diméthylaminopropanol et le diméthylaminoéthanol.

9. Pellicule comprenant un copolymère organopolysiloxane-polyurée séquencé dispersible dans l'eau selon la revendication 1.

10. Matière en feuille au moins partiellement revêtue, sur au moins une surface majeure, par la pellicule selon la revendication 8.

11. Copolymère organopolysiloxane-polyurée séquencé selon la revendication 1, dans lequel B' est choisi parmi les groupes alkylène, aralkylène, cycloalkylène, phénylène, un oxyde de polyéthylène, un oxyde de polypropylène, un oxyde de polytétraméthylène, un adipate de polyéthylène, une polycaprolactone, un polybutadiène et les mélanges de ceux-ci, et un radical qui complète une structure cyclique incluant A pour former un hétérocycle, ledit groupe contenant des groupes amines dans la chaîne ou pendants, ou des groupes acides carboxyliques pendants.
